# FASCICULE DE BREVET EUROPEEN

(11) **EP 3 555 209 B1**
(45) Date de publication et mention de la délivrance du brevet: **07.09.2022**
(21) Numéro de dépôt: 17811609.1
(22) Date de dépôt: 12.12.2017
(51) Int. Cl.: C08L 67/00, C08L 67/02

(54) **MATÉRIAU POLYMÉRIQUE BIODÉGRADABLE ET BIOSOURCÉ**
BIOLOGISCH ABBAUBARES POLYMERMATERIAL BIOLOGISCHEN URSPRUNGS
BIODEGRADABLE AND BIOSOURCED POLYMERIC MATERIAL

(30) Priorité: 13.12.2016 FR 1662369
(43) Date de publication de la demande: 23.10.2019
(73) Titulaire: Institut National des Sciences Appliquées de Lyon, 69621 Villeurbanne Cedex (FR); Université Claude Bernard Lyon 1, 69100 Villeurbanne (FR); Centre National de la Recherche Scientifique, 75016 Paris (FR); Université Jean Monnet Saint Etienne, 42100 Saint Etienne (FR)
(72) Inventeur: LIVI, Sébastien, 69100 Villeurbanne (FR); DUCHET-RUMEAU, Jannick, 01600 Sainte Euphemie (FR); GERARD, Jean-François, 69500 Bron (FR)
(74) Mandataire: Cabinet Becker et Associés
(86) Numéro de dépôt international: PCT/EP2017/082375
(87) Numéro de publication internationale: WO 2018/108881

(56) Documents cités:
- CN-B- 103 352 267
- FR-A1- 3 014 885
- LUANDA C. LINS ET AL: "Phosphonium ionic liquids as new compatibilizing agents of biopolymer blends composed of poly(butylene-adipate-co-terephtalate)/pol y(lactic acid) (PBAT/PLA)", RSC ADV., vol. 5, no. 73, 1 janvier 2015 (2015-01-01), pages 59082-59092, XP055387120, DOI: 10.1039/C5RA10241C
- SEBASTIEN LIVI ET AL: "Ionic liquids?lignin combination: an innovative way to improve mechanical behaviour and water vapour permeability of eco-designed biodegradable polymer blends", RSC ADV., vol. 5, no. 3, 1 janvier 2015 (2015-01-01) , pages 1989-1998, XP055387123, DOI: 10.1039/C4RA11919C

## Description

### DOMAINE DE L'INVENTION

L'invention concerne un matériau polymérique au moins partiellement biodégradable et au moins partiellement biosourcé.

Dans le cadre de la présente invention, on entend par « matériau au moins partiellement biodégradable », un matériau susceptible d'être dégradé totalement ou sinon au moins en partie par des organismes vivants, en particulier des bactéries, de manière à produire de l'eau, du dioxyde de carbone et/ou du méthane et éventuellement des sous-produits tels que des résidus ou une nouvelle biomasse qui sont non toxiques pour l'environnement.

Dans le cadre de la présente invention, on entend par « matériau au moins partiellement biosourcé», un matériau qui est issu en totalité ou en partie d'une biomasse. Autrement dit, il s'agit d'un matériau au moins partiellement sinon totalement organique, d'origine végétale (ce qui inclut notamment les algues et micro-algues), animale, bactérienne ou fongique, à l'état sauvage ou cultivé. Ledit matériau peut ainsi être choisi parmi les matières issues d'une culture, mais aussi ses déchets et/ou ses résidus. Ainsi, si le matériau est biosourcé, cela signifie qu'il s'agit d'un matériau totalement organique d'origine végétale, animale, bactérienne ou fongique.

### ETAT DE LA TECHNIQUE

Dans le contexte actuel des problématiques environnementales, des recherches intensives sont menées pour élaborer de nouveaux matériaux polymériques destinés à des applications variées telles que l'emballage (notamment les sacs et les films en plastique pour le transport de marchandises), la fabrication d'objets de la vie quotidienne (par exemple la vaisselle jetable).

Par exemple, les sacs de caisse en plastique sont généralement réalisés en polyéthylène, c'est-à-dire un matériau issu de la pétrochimie. Ces sacs plastiques sont la source de problèmes écologiques : non seulement lors de leur production du fait de la consommation de ressources pétrolières, mais également après leur usage. En effet, ces sacs causent des dommages environnementaux pour la faune et la flore lorsqu'ils sont abandonnés de manière sauvage. En outre, leur traitement en déchetterie est compliqué et coûteux et pose des problèmes d'émission de dioxyde de carbone et de fumées polluantes qui doivent faire l'objet également d'un retraitement.

Dans une démarche d'éco-conception, on cherche à élaborer des matériaux plastiques qui présentent une faible empreinte environnementale, de manière à protéger l'environnement et à réduire les effets de serre avec la diminution de la production de dioxyde de carbone.

Des travaux de recherches ont été entrepris pour trouver des alternatives aux matériaux polymériques issus de la pétrochimie.

A cet égard, comme exemple de matériau alternatif, on peut citer la publication intitulée « Phosphonium ionic liquids as new compatibilizing agents of biopolymer blends composed of poly(butylene-adipate-co-terephtalate)/poly(lactic acid) (PBAT/PLA) de Lins et al., RSC Adv., 2015, 5, 59082-59092, qui décrit des matériaux comprenant une matrice de poly(butylène adipate-co-téréphtalate) (ci-après abrégé PBAT), à savoir un polymère biodégradable mais synthétique, de l'acide polylactique (ci-après abrégé PLA) en tant qu'agent de renforcement, ainsi qu'un liquide ionique.

De plus, la publication intitulée « Ionic liquids - lignin combination : an innovative way to improve mechanical behaviour and water vapour permeability of eco-designed biodegradable polymer blends » de Livi et al., RCS Adv., 2015, 5, 1989-1998, décrit des matériaux comprenant également une matrice de PBAT, du PLA et de la lignine comme agents de renforcement, ainsi qu'un liquide ionique.

De tels matériaux alternatifs décrits dans ces deux publications présentent les inconvénients suivants :
- ils comportent une matrice à base de PBAT, qui est un polymère non biosourcé ;
- leurs propriétés mécaniques ne sont pas aussi performantes que celles des matériaux polymériques issus de la pétrochimie. De plus, elles peuvent s'avérer disparates selon les choix des agents de renforcement et des liquides ioniques.

Le document CN103352267 décrit un procédé de préparation de fibres composites présentant un cœur en cellulose et une gaine en polyester biosourcé. Au cours de ce procédé, un liquide ionique tel que le chlorure de 1-butyl-3-methylimidazolium est mis en œuvre pour solubiliser la cellulose. Un tel procédé s'avère complexe, couteux en énergie et requiert une grande quantité de liquide ionique.

Aussi, il existe un besoin pour des matériaux au moins partiellement biodégradables et au moins partiellement biosourcés présentant des propriétés mécaniques aussi performantes, voire même meilleures que les matériaux connus de l'état de la technique ; il serait également avantageux que ces matériaux puissent être mis en œuvre au cours de la fabrication d'objets tels que ceux précités selon la même processabilité que les matériaux issus de la pétrochimie.

Les inventeurs de la présente invention ont mis au point des matériaux polymériques qui remplissent au moins partiellement, voire totalement, ces objectifs.

### EXPOSE DE L'INVENTION

La présente invention a pour objet un matériau polymérique au moins partiellement biodégradable et au moins partiellement biosourcé qui se caractérise en ce qu'il comprend :
a) entre 10% et 80% d'une matrice comprenant au moins un polyester choisi dans le groupe constitué par le polybutylène succinate (ci-après abrégé PBS), le polytéréphtalate de butylène (ci-après abrégé PBT), le polybutylène succinate co-adipate (ci-après abrégé PBSA), le polyméthylène adipate/téréphthalate (ci-après abrégé PTMAT), le polyéthylène isosorbide téréphthalate (ci-après abrégé PEIT) et le poly(butylène succinate-co-téréphthalate (ci-après abrégé PBST) ;
b) entre 10% et 80% d'au moins un agent de renforcement biodégradable et biosourcé ; et
c) entre 0,5% et 5% d'au moins un liquide ionique, préférentiellement entre 0,5% et 2%, encore plus préférentiellement entre 0,5% et 1%, caractérisé en ce que le liquide ionique est un mélange eutectique DES (Deep Eutectic Solvents) comprenant au moins un sel de cations organiques et au moins un autre composé dans des proportions formant un mélange eutectique.

Sauf mention contraire, les pourcentages sont donnés en masse par rapport à la masse totale dudit matériau.

Le matériau polymérique au moins partiellement biodégradable et au moins partiellement biosourcé selon l'invention présente des propriétés mécaniques parfaitement intéressantes d'un point de vue de la processabilité par les techniques classiques de mise en forme des matériaux polymériques que sont notamment l'extrusion/étirage, l'extrusion/soufflage, l'extrusion/gonflage, l'injection et le thermoformage.

En effet, ledit matériau présente une rigidité caractérisée par un module de Young et par un pourcentage de déformation à la rupture qui est en adéquation avec la rigidité requise des matériaux polymériques qui sont mis en forme par les techniques précitées.

En outre, le matériau selon l'invention présente d'excellentes propriétés anti-feu et barrière à la vapeur d'eau. Cette propriété de barrière à la vapeur d'eau est particulièrement avantageuse lorsque le matériau polymérique selon l'invention est destiné à la fabrication d'emballages, en particulier d'emballages alimentaires. En effet, cette propriété augmente la durée de conservation des denrées alimentaires.

Le matériau selon l'invention présente également de bonnes propriétés barrière aux gaz.

### DESCRIPTION DETAILLEE DE L'INVENTION

Le matériau polymérique au moins partiellement biodégradable et au moins partiellement biosourcé peut comprendre, en pourcentages massiques exprimés par rapport à la masse totale dudit matériau :
a) entre 10% et 80%, de préférence entre 50% et 80%, encore plus préférentiellement entre 50% et 70%, de la matrice,
b) entre 10% et 80%, de préférence entre 10% et 50%, encore plus préférentiellement entre 10% et 30%, de l'agent de renforcement biodégradable et biosourcé, et
a) entre 0,5% et 2%, encore plus préférentiellement entre 0,5% et 1%, du liquide ionique caractérisé en ce que le liquide ionique est un mélange eutectique DES (Deep Eutectic

Solvents) comprenant au moins un sel de cations organiques et au moins un autre composé dans des proportions formant un mélange eutectique.

Dans un mode de réalisation de l'invention, la matrice comprend au moins un polyester partiellement biosourcé qui est du PBT ou du PEIT.

Dans un mode de réalisation de l'invention, la matrice comprend au moins un polyester biodégradable qui est choisi parmi le PBS, le PBSA, le PTMAT et le PBST. Le PBS est en outre un polymère biosourcé.

De préférence, le polyester est choisi parmi le PBS, le PBT et le PEIT. Encore plus préférentiellement, il s'agit du PBS qui est biodégradable et biosourcé.

Dans un mode de réalisation de l'invention, le matériau polymérique comprend un seul agent de renforcement.

Dans un autre mode de réalisation de l'invention, le matériau polymérique comprend deux agents de renforcement.

L'agent de renforcement biodégradable et biosourcé peut être choisi dans le groupe constitué par l'acide polylactique (abrégé PLA), le polyhydroxyalkanoate (ci-après abrégé PHA), le polyhydroxybutyrate (ci-après abrégé PHB), le polyhydroxyvalérate (ci-après abrégé PHV), la lignine, la cellulose, les éthers de cellulose tels que le methyl cellulose (ci-après abrégé MC), l'hydroxyéthyl cellulose (ci-après abrégé HEC), le carboxyméthyl cellulose (ci-après abrégé CMC) et le méthylhydroxy propyl cellulose (ci-après abrégé MHPC).

Avantageusement, l'agent de renforcement est choisi parmi le PLA, la lignine, la cellulose et les éthers de cellulose.

De préférence, la lignine est un lignosulfonate. Par exemple, il peut s'agir d'un lignosulfonate d'ammonium, calcium, magnésium, sodium ou de potassium.

La lignine, la cellulose et les éthers de cellulose sont des matériaux renouvelables. En effet, ils proviennent de coproduits ou de déchets, par exemple de déchets de l'industrie papetière. C'est pourquoi, lorsque le matériau polymérique selon l'invention comprend ces constituants en tant qu'agent de valorisation, cela est particulièrement avantageux d'un point de vue environnemental. En effet, le matériau selon l'invention présente l'intérêt de recycler des déchets.
Dans le cadre de la présente invention, on entend par « liquides ioniques », des sels présentant une température de fusion inférieure à 100°C et qui sont, pour la plupart, liquides à une température proche de la température ambiante (environ 25°C). Ces sels comprennent des cations organiques complexés avec des anions inorganiques ou organiques. Dans le cadre de l'invention, le liquide ionique est un DES, pour « Deep Eutectic Solvents », comprenant au moins un sel de cations organiques et au moins un autre composé dans des proportions correspondant au point eutectique du mélange. Le DES a une diminution de sa température de fusion importante par rapport aux composés qui le forment.

Selon un mode de réalisation, au moins un sel de cations organiques comprend des cations organiques complexés à des anions inorganiques ou organiques.

L'anion peut être choisi dans le groupe constitué des anions dialkylphosphate, dialkylphosphinate, dicyanamide, bis(trifluorométhylsulfonyl)imide, bis(trifluorométhane)sulfonimide, alkylcarboxylate, hexafluorophosphate, sulfonate, alkylsulfate, tétrafluoroborate, trifluorométhanesulfonate, [C₄F₉SO₃]⁻, [CF₃CO₂]⁻, [(CF₃SO₂)₃C]⁻ , [(CF₃SO₂)₂N]⁻, nitrate, [CIO₄]⁻, F⁻, Br⁻, Cl⁻, I⁻, [Al₂Cl₇]⁻, chloroaluminate, [CuCl₂], [AuCl₄]⁻, [ZnCl₃]⁻ , [SnCl₃]⁻, ainsi que leurs mélanges.

De préférence, l'anion est choisi dans le groupe comprenant les anions dialkylphosphate, dialkylphosphinate, dicyanamide, alkylcarboxylate, lactate et leurs mélanges, où le groupe alkyl est linéaire ou ramifié et comprend de 1 à 12, de préférence de 2 à 8, atomes de carbone.

Le cation organique peut être choisi dans le groupe constitué des cations tétraalkylphosphonium, N,N-dialkylimidazolium, N-alkylpyridinium, N-dialkylpipéridinium, N-dialkylpyrrolidinium, tétraalkylammonium, pyrazolium, N-alkylthiazolium, trialkylsulfonium, trialkyltriazolium, cholinium, ainsi que leurs mélanges.

De préférence, le liquide ionique est formé d'un cation tétraalkylphosphonium dont le groupe alkyle est avantageusement linéaire et renferme de 1 à 18, de préférence de 4 à 14 atomes de carbone.

Le sel de cation organique du liquide ionique (abrégé LI) peut être choisi dans le groupe constitué par le trihexyl(tetradecyl)phosphonium bistriflimide (abrégé LI-TFSI), le trihexyl(tetradecyl)phosphonium chloride (abrégé LI-CI), le trihexyl(tetradecyl)phosphonium bromide (abrégé LI-Br), le trihexyl(tetradecyl)phosphonium bis-2,4,4,4 (trimethylpentyl)phosphinate (abrégé LI-TMP), le trihexyl(tetradecyl)phosphonium bis-2-(ethylhexyl)phosphate (abrégé LI-EHP), le trihexyl(tetradecyl)phosphonium 2-ethylhexanoate (abrégé LI-EHT) et le tributylethylphosphonium diethylphosphate (abrégé LI-Ph).

De préférence, le sel de cations organique du liquide ionique est choisi parmi LI-Cl, LI-TMP, LI-Ph et leurs mélanges.

Pour former un mélange DES, le ou les sels ci-dessus peuvent être mélangés avec des molécules organiques comme le glycérol ou l'urée. De tels mélanges DES sont connus de l'homme du métier, notamment dans la thèse de Veronika Fischer (Properties and Applications of Deep Eutectic Solvents and Low-Melting Mixtures, Doktorgrades der Naturwissenschaften (Dr. rer. nat.) an der Fakultät für Chemie und Pharmazie der Universität Regensburg, 2015). L'homme du métier saura déterminer les proportions des différents composants du mélange eutectique DES employé.

Dans un mode de réalisation de l'invention, le matériau polymérique comprend au moins :
- du PBS ;
- de la lignine et/ou de la cellulose et/ou au moins un éther de cellulose et/ou du PLA ;
- au moins un liquide ionique, de préférence un liquide ionique choisi parmi LI-CI, LI-TMP et LI-Ph.

Dans un mode de réalisation de l'invention, le matériau polymérique comprend au moins :
- du PBS ;
- de la lignine et/ou du PLA;
- au moins un liquide ionique, de préférence un liquide ionique choisi parmi LI-CI, LI-TMP et LI-Ph.

Dans un mode de réalisation de l'invention, le matériau polymérique comprend au moins :
- du PBS ;
- de la lignine et de la cellulose ;
- au moins un liquide ionique, de préférence un liquide ionique choisi parmi LI-CI, LI-TMP et LI-Ph.

Dans un mode de réalisation de l'invention, le matériau polymérique comprend au moins :
- du PBS ;
- de la lignine et au moins un éther de cellulose ;
- au moins un liquide ionique, de préférence un liquide ionique choisi parmi LI-CI, LI-TMP et LI-Ph.

Dans un mode de réalisation de l'invention, le matériau polymérique comprend au moins :
- du PBS ;
- du PLA et de la cellulose ;
- au moins un liquide ionique, de préférence un liquide ionique choisi parmi LI-CI, LI-TMP et LI-Ph.

Dans un mode de réalisation de l'invention, le matériau polymérique comprend au moins :
- du PBS ;
- du PLA et au moins un éther de cellulose ;
- au moins un liquide ionique, de préférence un liquide ionique choisi parmi LI-CI, LI-TMP et LI-Ph.

Le matériau polymérique selon l'invention peut en outre comprendre au moins un composé optionnel choisi parmi :
- les charges, en particulier des charges de renfort (qui sont différentes des agents de renforcement que comprend ledit matériau), des charges opacifiantes et des charges conductrices, par exemple les nanotubes de carbone, les fibres de carbone, le noir de carbone, les fibres de verre, la silice, le titane ou les argiles;
- les retardateurs de flamme ;
- les agents anti-ultraviolets ;
- les stabilisants thermiques ;
- les pigments et/ou colorants ;
- les agents bactéricides ; et
- les catalyseurs ;
pris seul ou en mélanges.

Le matériau polymérique selon l'invention comprend entre 50% et 80% de matrice.

Dans un mode de réalisation, le matériau polymérique comprend entre 10% et 50% d'agent de renforcement biodégradable et biosourcé.

Dans un autre mode de réalisation, le matériau polymérique comprend entre 0,5% et 2% de liquide ionique, préférentiellement entre 0,5% et 1% de liquide ionique.

La présente invention a aussi pour objet un procédé de fabrication du matériau polymérique tel que décrit ci-dessus qui se caractérise en ce qu'il comprend au moins une étape consistant en la préparation d'un mélange contenant au moins la matrice, l'agent de renforcement et le liquide ionique tels que décrits ci-dessus.

Les inventeurs ont constaté que le liquide ionique favorise la dispersion de l'agent de renforcement dans la matrice et agit en outre comme un agent compatibilisant de ces derniers, dans le cas où l'agent de renforcement est un polymère normalement non miscible avec la matrice polymère. Lorsque l'agent de renforcement est de la lignine, de la cellulose ou un éther de cellulose, le liquide ionique favorise la dissolution de cet agent de renforcement dans la matrice.

Ainsi, la présence du liquide ionique dans le matériau selon l'invention favorise le mélange des composés en présence et permet d'obtenir un matériau parfaitement homogène.

Le mélange peut être réalisé sous agitation dont la vitesse est avantageusement comprise entre 50 tours/minute et 300 tours/minute, de préférence entre 80 tours/minute et 200 tours/minute, à une température avantageusement comprise entre 150°C et 190°C, de préférence entre 150°C et 170°C.

Le mélange peut en outre comprendre les composés optionnels qui ont été décrits ci-dessus.

L'ordre d'incorporation des différents constituants dans le mélange n'a pas d'importance.

Dans un mode de réalisation de l'invention, on mélange d'abord ensemble la matrice et le liquide ionique, puis on y ajoute l'agent de renforcement.

Dans un autre mode de réalisation de l'invention, on prépare un pré-mélange contenant le liquide ionique et l'agent de renforcement. Ensuite, on ajoute ce pré-mélange à la matrice de manière à obtenir ledit mélange.

Le mélange peut être effectué dans tout dispositif de malaxage de polymères, par exemple un mélangeur à double vis. Ces dispositifs sont parfaitement à la portée de l'homme du métier. Par exemple, il peut s'agir du dispositif commercialisé par la société THERMOFISHER sous la dénomination commerciale HAAKE MiniCTW ^{®}.

La fabrication du matériau polymérique selon l'invention est parfaitement à la portée de l'homme du métier qui maîtrise les techniques de mélanges polymériques. Ainsi, les paramètres d'agitation et de températures du mélange qui ont été détaillés ci-dessus sont parfaitement à la portée de l'homme du métier.

Le matériau polymérique selon l'invention peut ensuite être mis en forme par différentes techniques parfaitement à la portée de l'homme du métier que sont notamment l'extrusion, l'extrusion/gonflage, l'extrusion/soufflage, l'extrusion/étirage, l'injection et le thermoformage.

L'invention a aussi pour objet un film, de préférence un film étirable, constitué totalement ou en partie du matériau polymérique tel que décrit ci-dessus. Ce film peut avoir été fabriqué à partir des techniques classiques de fabrication de films étirables que sont notamment l'extrusion/étirage et l'extrusion gonflage. Ces techniques sont parfaitement maîtrisées par l'homme du métier.

Dans un mode de réalisation de l'invention, le film est un film de paillage.

L'invention a aussi pour objet un sac constitué totalement ou en partie du film tel que décrit ci-dessus.

L'invention a également pour objet un article de vaisselle, notamment de vaisselle jetable, qui est constitué totalement ou en partie du matériau polymérique au moins partiellement biodégradable et au moins partiellement biosourcé tel que décrit ci-dessus. Cet article peut être un gobelet, une tasse, une assiette, un verre, une fourchette, une cuillère ou bien un couteau. Ledit article de vaisselle peut avoir été fabriqué à partir de techniques classiques de fabrication de tels articles, par exemple par injection ou thermoformage. Ces techniques sont parfaitement maîtrisées par l'homme du métier.

### EXEMPLES

Des expérimentations ont été réalisées sur des matériaux polymériques selon l'invention afin de déterminer leurs propriétés mécaniques et de les comparer à celles d'autres matériaux dits « comparatifs » dont la matrice était constituée de PBAT.

Le PBAT est un polymère biodégradable mais synthétique, c'est-à-dire non biosourcé.

Dans le cadre de ces expérimentations, les propriétés mécaniques suivantes ont été déterminées :
a) le module de Young exprimé en MPa (ci-après abrégé « Module ») ;
b) le pourcentage de déformation à la rupture (ci-après abrégé « Déformation ») ;
c) la contrainte exprimée en MPa.

Le module de Young, le pourcentage de déformation à la rupture et la contrainte ont été déterminés en mettant en œuvre le mode opératoire tel que décrit dans les normes européennes NF EN ISO 527-1 : 1996 et NF EN ISO 527-2 : 1996.

Tous les matériaux polymériques selon l'invention ont été préparés de la manière suivante :
On a mélangé dans un mélangeur bi-vis commercialisé par la société DSM XPLORE sous la dénomination commerciale « Xplore^{®} MC 15 » à une température de 160°C et sous une agitation de 100 tours/minute, selon les quantités indiquées ci-après pour chacun des matériaux, une matrice (PBS ou PBAT), un agent de renforcement (PLA ou lignine), et le cas échéant un liquide ionique (LI-TMP ou LI-EHT ou LI-Cl ou Li-Ph ou LI-Br).

Le mélange ainsi obtenu a ensuite été mis en forme avec un dispositif de moulage par micro-injection commercialisé par la société DSM XPLORE sous la dénomination commerciale « Xplore^{®} IM 12» pour obtenir des matériaux polymériques présentant la forme d'une éprouvette haltère de 2 mm d'épaisseur conforme aux éprouvettes haltères détaillées dans les normes précitées.

### I - Comparaison des propriétés mécaniques de matériaux polymériques selon l'invention dont la matrice est du PBS et l'agent de renforcement est le PLA avec celles de matériaux dits « comparatifs » dont la matrice est du PBAT :

Les matériaux polymériques selon l'invention suivants ont été préparés. Les pourcentages indiqués sont les teneurs massiques de chacun des constituants par rapport à la masse totale dudit matériau :
- 79,2% de PBS, 19,8 % de PLA et 1% de LI-TMP (ci-après abrégé : PBS/PLA/LI-TMP) ;
- 79,2% de PBS, 19,8 % de PLA et 1% de LI-EHP (ci-après abrégé : PBS/PLA/LI-EHP);
- 79,2% de PBS, 19,8 % de PLA et 1% de LI-Cl ci-après abrégé : PBS/PLA/LI-CI).

En outre, un matériau comprenant, en teneurs massiques par rapport à la masse totale dudit matériau : 80% de PBS et 20% de PLA a été préparé. Ce matériau est abrégé ci-après PBS/PLA.

Le tableau 1 détaille ci-dessous les propriétés mécaniques des éprouvettes haltères constituées de ces différents matériaux, ainsi que celles constituées uniquement de PBS ou de PLA.

**Tableau 1 détaillant les propriétés mécaniques du PLA, PBS, d'un matériau PBS/PLA et de 3 matériaux polymériques selon l'invention.**

| Echantillons | Module (MPa) | Déformation (%) | Contrainte (Mpa) |
|---|---|---|---|
| PLA | 2507 | 4 | 70 |
| PBS | 377 | 370 | 39,5 |
| PBS/PLA | 450 | 595 | 38 |
| PBS/PLA/LI-TMP | 500 | 680 | 38 |
| PBS/PLA/LI-EHP | 460 | 550 | 36 |
| PBS/PLA/LI-CI | 560 | 560 | 36 |

Le PLA est un polymère très rigide (module de Young de 2507 MPa) mais également très cassant (4% de déformation à la rupture). C'est pourquoi, au vu des propriétés mécaniques du PBS/PLA, on relève que le PLA apporte au PBS une augmentation importante du Module de Young (450 au lieu de 377 MPa).

Lorsque les matériaux comprennent en outre 1 % de liquide ionique (à savoir les matériaux selon l'invention), d'après les résultats du tableau 1, on observe dans tous les cas une légère augmentation de la rigidité et en particulier pour IL-TMP et IL-CI avec des augmentations de 10% et 25% du Module de Young, et ce tout en conservant une déformation supérieure à 500% excepté dans le cas de LI-TMP où une plus nette augmentation de la déformation à la rupture est observée passant de 595% à 680%.

En d'autres termes, les matériaux selon l'invention présentent une rigidité meilleure que le matériau contenant uniquement du PBS et celui contenant un mélange de PBS/PLA, et ce tout en conservant un pourcentage de déformation à la rupture. Cela est avantageux pour les techniques de mise en forme des matériaux polymériques qui ont été détaillées ci-dessus. L'augmentation du module de Young est particulièrement intéressante pour les applications auxquelles on destine les matériaux polymériques selon l'invention.

Ensuite, les propriétés mécaniques de ces matériaux polymériques selon l'invention ont été comparées à celles d'un matériau polymérique qui avait pour matrice du PBAT.

Les matériaux polymériques comparatifs suivants ont été préparés. Les pourcentages indiqués sont les teneurs massiques de chacun des constituants par rapport à la masse totale dudit matériau :
- 79,2% de PBAT, 19,8 % de PLA et 1% de LI-TMP (ci-après abrégé : PBAT/PLA/LI-TMP) ;
- 79,2% de PBAT, 19,8 % de PLA et 1% de LI-EHP (ci-après abrégé : PBAT/PLA/LI-EHP);
- 79,2% de PBAT, 19,8 % de PLA et 1% de LI-Cl ci-après abrégé : PBAT/PLA/LI-Cl) ;
- 79,2% de PBAT, 19,8 % de PLA et 1% de LI-TFSI ci-après abrégé : PBAT/PLA/LI-TFSI).
- 79,2% de PBAT, 19,8 % de PLA et 1% de LI-EHT ci-après abrégé : PBAT/PLA/LI-EHT).

En outre, un matériau polymérique comprenant, en teneurs massiques par rapport à la masse totale dudit matériau : 80% de PBAT et 20% de PLA a été préparé. Ce matériau est abrégé ci-après PBAT/PLA.

Le tableau 2 détaille ci-dessous les propriétés mécaniques de ces différents matériaux polymériques dits comparatifs, ainsi que celles du PBAT et du PLA.

**Tableau 2 détaillant les propriétés mécaniques du PLA, PBAT, d'un matériau PBAT/PLA et de matériaux polymériques comparatifs**

| Echantillons | Module (MPa) | Déformation (%) | Contrainte (MPa) |
|---|---|---|---|
| PLA | 2507 | 4 | 70 |
| PBAT | 38 | 582 | 20 |
| PBAT/PLA | 115 | 540 | 23 |
| PBAT/PLA/LI-TMP | 165 | 910 | 28 |
| PBAT/PLA/LI-EHP | 135 | 915 | 26 |
| PBAT/PLA/LI-Cl | 140 | 1000 | 24 |
| PBAT/PLA/LI-TFSI | 138 | 675 | 22 |
| PBAT/PLA/LI-EHT | 215 | 620 | 28 |

Au vu des résultats exprimés dans le tableau 2 ci-dessus, en particulier en comparant avec les valeurs du matériau PBAT/PLA, on relève que pour des matériaux polymériques dont la matrice est du PBAT, la présence du liquide ionique augmente certes le module de Young et le pourcentage de la déformation à la rupture. Cependant, en comparaison avec les valeurs détaillées dans le tableau 1, les valeurs des modules de Young de ces matériaux polymériques de l'ordre de 115-215 MPa sont bien inférieures (de plus de la moitié) à celles des matériaux polymériques selon l'invention qui sont de l'ordre de 500 MPa.

Ainsi, les matériaux polymériques selon l'invention présentent une meilleure rigidité que les matériaux polymériques dont la matrice est du PBAT.

### II - Comparaison des propriétés mécaniques de matériaux selon l'invention dont la matrice est du PBS et l'agent de renforcement est la lignine avec celles de matériaux dits « comparatifs » dont la matrice est du PBAT :

Les matériaux polymériques selon l'invention suivants ont été préparés. Les pourcentages indiqués sont les teneurs massiques de chacun des constituants par rapport à la masse totale dudit matériau :
- 79,2% de PBS, 19,8% de lignine et 1% de LI-Cl (ci-après abrégé : PBS/ 20% lignine/ 1% LI-Cl) ;
- 78,4% de PBS, 19,6 % de lignine et 2% de LI-Cl (ci-après abrégé : PBS/ 20% lignine/ 2% LI-Cl);
- 76,2% de PBS, 19% de lignine et 4,8% de LI-Cl (ci-après abrégé : PBS/ 20% lignine/ 5% LI-Cl);
- 78,4% de PBS, 19,6 % de lignine et 2% de LI-TMP (ci-après abrégé : PBS/ 20% lignine/ 2% LI-TMP);
- 78,4% de PBS, 19,6 % de lignine et 2% de LI-TFSI (ci-après abrégé : PBS/ 20% lignine/ 2% LI-TFSI);
- 57,1% de PBS, 38,1% de lignine et 4,8% de LI-Cl (ci-après abrégé : PBS/ 40% lignine/5% LI-Cl) ;
- 57,1% de PBS, 38,1% de lignine et 4,8% de LI-Br (ci-après abrégé : PBS/ 40% lignine/5% LI-Br).

En outre, des matériaux polymériques comprenant, en teneurs massiques par rapport à la masse totale dudit matériau respectivement 80% de PBS et 20% de lignine et 60% de PBS et 40% de lignine ont été préparés. Ces matériaux sont abrégés ci-après respectivement PBS/ 20% lignine et PBS/ 40% lignine.

Le tableau 3 détaille ci-dessous les propriétés mécaniques de ces différents matériaux polymériques, ainsi que celles du PBS.

**Tableau 3 détaillant les propriétés mécaniques du PBS, de matériaux PBS/lignine, PBS/40% lignine et de 7 matériaux polymériques selon l'invention.**

| Echantillon | Module (MPa) | Déformation rupture (%) | Contrainte (MPa) |
|---|---|---|---|
| PBS | 377 | 370 | 39,5 |
| PBS/ 20% lignine | 450 | 380 | 31 |
| PBS/ 20% lignine/ 1% LI-Cl | 430 | 400 | 36 |
| PBS/ 20% lignine/ 2% LI-Cl | 475 | 350 | 31 |
| PBS/ 20% lignine/ 5% LI-Cl | 465 | 290 | 29 |
| PBS/ 20% lignine / 2% LI-TMP | 515 | 21 | 29 |
| PBS/ 20% lignine/ 2% LI-TFSI | 560 | 30 | 28 |
| PBS/ 40% lignine | 625 | 8 | 26 |
| PBS/ 40% lignine/ 5% LI-Cl | 595 | 6 | 22 |
| PBS/ 40% lignine/ 5% LI-Br | 785 | 4 | 23 |

Au vu des résultats détaillés dans le tableau 3, on relève que l'ajout de 20% de lignine dans une matrice de PBS conduit à une augmentation de la rigidité de l'ordre de 19% par rapport à la rigidité du matériau constitué d'une matrice de PBS et permet de conserver une déformation à la rupture identique. Cela met en évidence que l'on peut ajouter de la lignine sans observer de pertes des propriétés mécaniques en traction uniaxiale.

Lorsque l'on ajoute 40% de lignine dans la matrice PBS, une augmentation du module de Young est observée (de l'ordre de 66%). En outre, une diminution importante de la déformation est obtenue : en effet, on passe d'une déformation de 380% à une déformation de 8%.

Ainsi, dans le matériau polymérique selon l'invention, la lignine contribue à augmenter le module de Young dudit matériau ; ce qui est très avantageux pour les applications rappelées ci-dessus auxquelles on destine ledit matériau.

Lorsque le matériau polymérique selon l'invention comprend 1% de LI-Cl, une très légère diminution du module de Young est observée et une légère augmentation de la déformation est obtenue. Et lorsque le matériau polymérique selon l'invention comprend 2%, et même 5 % de LI-CI, une conservation des propriétés mécaniques est observée en termes de modules de Young et de déformation à la rupture.

Lorsqu'on change la nature du liquide ionique dans le matériau polymérique selon l'invention, on observe des augmentations du module de Young (plus 14% pour LI-TMP et plus 25% pour LI-TFSI) qui sont couplées à des baisses de la déformation à la rupture de 380% à 25-30%. Du fait du module de Young élevé, ces matériaux polymériques selon l'invention présentent des propriétés mécaniques très intéressantes pour les techniques de mise en forme rappelées ci-dessus (par exemple injection et thermoformage).

Ainsi, en fonction de l'application visée, en jouant sur la nature du liquide ionique, il est possible d'augmenter soit la déformation à la rupture, soit la rigidité.

Pour des matériaux polymériques selon l'invention comprenant 40% de lignine, une augmentation de la rigidité par rapport au PBS de 66% est obtenue. Lorsque le matériau polymérique selon l'invention comprend 5% de LI-TFSI, une augmentation de 108% est obtenue avec des modules de 625 et 785 MPa comparés à la valeur de 377 MPa.

Ensuite, les propriétés mécaniques des matériaux polymériques selon l'invention ont été comparées à celles de matériaux ayant pour matrice du PBAT.

Les matériaux polymériques comparatifs suivants ont été préparés. Les pourcentages indiqués sont les teneurs massiques de chacun des constituants par rapport à la masse totale dudit matériau :
- 79,2% de PBAT, 19,8 % de lignine et 1% de LI-Ph (ci-après abrégé : PBAT/20% lignine/1% LI-Ph) ;
- 78,4% de PBAT, 19,6 % de lignine et 2% de LI-Ph (ci-après abrégé : PBAT/20% lignine/2% LI-Ph);
- 76,2% de PBAT, 19 % de lignine et 4,8% de LI-Ph (ci-après abrégé : PBAT/20% lignine/5% LI-Ph) ;
- 69,3% de PBAT, 29,7 % de lignine et 1% de LI-Ph (ci-après abrégé : PBAT/30% lignine/1% LI-Ph) ;
- 68,6% de PBAT, 29,4 % de lignine et 2% de LI-Ph (ci-après abrégé : PBAT/30% lignine/2% LI-Ph) ;
- 66,7% de PBAT, 28,5 % de lignine et 4,8% de LI-Ph (ci-après abrégé : PBAT/30% lignine/5% LI-Ph) ;
- 79,2% de PBAT, 19,8 % de lignine et 1% de LI-Cl (ci-après abrégé : PBAT/20% lignine/l%LI-CI) ;
- 78,4% de PBAT, 19,6 % de lignine et 2% de LI-Cl (ci-après abrégé : PBAT/20% lignine/2% LI-Cl);
- 76,2% de PBAT, 19 % de lignine et 4,8% de LI-Cl (ci-après abrégé : PBAT/20% lignine/5% LI-Cl) ;
- 69,3% de PBAT, 29,7 % de lignine et 1% de LI-Cl (ci-après abrégé : PBAT/30% lignine/1%LI-Cl) ;
- 68,6% de PBAT, 29,4 % de lignine et 2% de LI-Cl (ci-après abrégé : PBAT/30% lignine/2%LI-Cl) ;
- 66,7% de PBAT, 28,5 % de lignine et 4,8% de LI-Cl (ci-après abrégé : PBS/30% lignine/5%LI-Cl).

Le tableau 4 détaille ci-dessous les propriétés mécaniques de ces différents matériaux polymériques dits comparatifs, ainsi que celles du PBAT.

**Tableau 4 détaillant les propriétés mécaniques du PBAT et de matériaux polymériques comparatifs**

| Echantillon | Module (MPa) | Déformation rupture (%) | Contrainte (MPa) |
|---|---|---|---|
| PBAT | 38 | 582 | 20 |
| PBAT/20% lignine/1% LI-Ph | 49 | 749 | 19 |
| PBAT/20% lignine/ 2% LI-Ph | 55 | 745 | 14 |
| PBAT/20% lignine/ 5% LI-Ph | 44 | 617 | 17 |
| PBAT/ 30% lignine/ 1% LI-Ph | 61 | 483 | 13 |
| PBAT/30% lignine/ 2% LI-Ph | 58 | 401 | 12 |
| PBAT/ 30% lignine/ 5% LI-Ph | 40 | 561 | 16 |
| PBAT/ 20% Lignine/ 1% LI-Cl | 36 | 532 | 23 |
| PBAT/ 20% Lignine/ 2% LI-Cl | 39 | 549 | 20 |
| PBAT/ 20% Lignine/ 5% LI-Cl | 38 | 642 | 20 |
| PBAT/30% Lignine/1% LI-Cl | 54 | 455 | 17 |
| PBAT/30% Lignine/2% LI-Cl | 38 | 551 | 19 |
| PBAT/30% Lignine/5% LI-Cl | 61 | 459 | 14 |

Au vu des résultats du tableau 4 et en comparaison avec ceux du tableau 3, on relève que ces matériaux polymériques comparatifs ont un module de Young environ 10 fois moins élevé que celui des matériaux polymériques selon l'invention.

A la différence des matériaux polymériques selon l'invention, ces matériaux polymériques comparatifs ne présentent pas une rigidité satisfaisante pour leur mise en forme selon les techniques détaillées ci-dessus (à savoir l'extrusion/gonflage, l'extrusion/soufflage, l'extrusion/étirage, l'injection et le thermoformage).

### II - Comparaison (Exemple avec DES)

Dans cette partie, un DES à base de chlorure de cholinium et de glycérol a été utilisé à des taux de 1% dans des mélanges contenant 79.2% de PBS, 19.8% de lignine et contenant 89.1% de PBS et 9.9% de lignine. Dans les deux cas, l'insertion de lignine induit une augmentation significative du Module de Young combinée à une diminution importante de l'allongement à la rupture. Ensuite, l'addition de 1% de DES au mélange contenant 89.1% de PBS et 9.9% de lignine conduit à une très légère baisse de 5% du module de Young ainsi qu'à une augmentation de la déformation à la rupture de 45%. Lorsque le taux de lignine passe de 9.9% à 19.8%, une augmentation de 32% de l'allongement à la rupture est observé ainsi qu'une baisse limitée de 7.4% de la rigidité.

| Echantillon | Module (MPa) | Déformation rupture (%) |
|---|---|---|
| PBS | 313 | 358 |
| PBS/10% lignine | 352 | 236 |
| PBS/10% lignine/ 1% LI11 | 297 | 342 |
| PBS/20% lignine | 430 | 43 |
| PBS/20% lignine/ 1% LI11 | 398 | 57 |

## Revendications

1. Matériau polymérique au moins partiellement biodégradable et au moins partiellement biosourcé, **caractérisé en ce qu'**il comprend, en pourcentages massiques exprimés par rapport à la masse totale dudit matériau, au moins :
a) entre 10% et 80% d'une matrice comprenant au moins un polyester choisi dans le groupe constitué par le polybutylène succinate (abrégé PBS), le polytéréphtalate de butylène (abrégé PBT), le polybutylène succinate co-adipate (abrégé PBSA), le polyméthylène adipate/téréphthalate (abrégé PTMAT), le polyéthylène isosorbide téréphthalate (abrégé PEIT) et le polybutylène succinate-co-téréphthalate (abrégé PBST) ;
b) entre 10% et 80% d'au moins un agent de renforcement biodégradable et biosourcé ;
c) entre 0,5% et 5% d'au moins un liquide ionique **caractérisé en ce que** le liquide ionique est un mélange eutectique DES (Deep Eutectic Solvents) comprenant au moins un sel de cations organiques et au moins un autre composé dans des proportions formant un mélange eutectique.

2. Matériau polymérique selon la revendication 1, **caractérisé en ce que** le polyester est choisi parmi le PBS, le PBT et le PEIT.

3. Matériau polymérique selon la revendication 1 ou 2, **caractérisé en ce que** l'agent de renforcement est choisi dans le groupe constitué par l'acide polylactique (abrégé PLA), le polyhydroxyalkanoate (abrégé PHA), le polyhydroxybutyrate (abrégé PHB), le polyhydroxyvalérate (abrégé PHV), la lignine, la cellulose et les éthers de cellulose.

4. Matériau polymérique selon la revendication 3, **caractérisé en ce que** l'agent de renforcement est choisi parmi le PLA, la lignine, la cellulose et les éthers de cellulose.

5. Matériau polymérique selon l'une quelconque des revendications 1 à 4, **caractérisé en ce que** le au moins un sel de cation organiques comprend des cations organiques complexés avec des anions inorganiques ou organiques.

6. Matériau polymérique selon l'une quelconque des revendications 1 à 5, **caractérisé en ce que** le cation organique est choisi dans le groupe constitué des cations tétraalkylphosphonium, N,N-dialkylimidazolium, N-alkylpyridinium, N-dialkylpipéridinium, N-dialkylpyrrolidinium, tétraalkylammonium, pyrazolium, N-alkylthiazolium, trialkylsulfonium, trialkyltriazolium, cholinium et leurs mélanges.

7. Matériau polymérique selon l'une quelconque des revendications 1 à 6 **caractérisé en ce que** l'anion du sel de cation organique est choisi dans le groupe constitué des anions dialkylphosphate, dialkylphosphinate, dicyanamide, bis(trifluorométhylsulfonyl)imide, bis(trifluorométhane)sulfonimide, alkylcarboxylate, hexafluorophosphate, sulfonate, alkylsulfate, tétrafluoroborate, trifluorométhanesulfonate, [C₄F₉SO₃]⁻, [CF₃CO₂]⁻, [(CF₃SO₂)₃C]⁻, [(CF₃So₂)₂N]⁻, nitrate, [ClO₄]⁻ , F⁻, Br⁻, Cl⁻, I⁻, [Al₂Cl₇]⁻, chloroaluminate, [CuCl₂], [AuCl₄]⁻, [ZnCl₃]⁻, [SnCl₃]⁻, et leurs mélanges.

8. Matériau polymérique selon l'une quelconque des revendications 1 à 7, **caractérisé en ce que** le sel de cation organique est choisi dans le groupe constitué par le trihexyl(tetradecyl)phosphonium bistriflimide (abrégé LI-TFSI), le trihexyl(tetradecyl)phosphonium chloride (abrégé LI-Cl), le trihexyl(tetradecyl)phosphonium bromide (abrégé LI-Br), le trihexyl(tetradecyl)phosphonium bis-2,4,4,4 (trimethylpentyl)phosphinate (abrégé LI-TMP), le trihexyl(tetradecyl)phosphonium bis-2-(ethylhexyl)phosphate (abrégé LI-EHP), le trihexyl(tetradecyl)phosphonium 2-ethylhexanoate (abrégé LI-EHT) et le tributylethylphosphonium diethylphosphate (abrégé LI-Ph).

9. Matériau polymérique selon la revendication 8, **caractérisé en ce que** le sel de cation organique est choisi dans le groupe constitué par le trihexyl(tetradecyl)phosphonium chloride (abrégé LI-CI), le trihexyl(tetradecyl)phosphonium bis-2,4,4,4 (trimethylpentyl)phosphinate (abrégé LI-TMP) et le tributylethylphosphonium diethylphosphate (abrégé LI-Ph) et leurs mélanges.

10. Matériau polymérique selon l'une quelconque des revendications 1 à 9, **caractérisé en ce que** le au moins un autre composé du DES du mélange eutectique est choisi parmi le glycérol, l'urée et leurs mélanges.

11. Matériau polymérique selon l'une quelconque des revendications 1 à 10, **caractérisé en ce qu'**il comprend entre 50% et 80%, de matrice

12. Matériau polymérique selon l'une quelconque des revendications 1 à 11, **caractérisé en ce qu'**il comprend entre 10% et 50% d'agent de renforcement biodégradable et biosourcé.

13. Matériau polymérique selon l'une quelconque des revendications 1 à 12, **caractérisé en ce qu'**il comprend entre 0,5% et 2% de liquide ionique, préférentiellement entre 0,5% et 1% de liquide ionique.

14. Film, de préférence film étirable, ou article de vaisselle constitué totalement ou en partie de du matériau polymérique selon l'une quelconque des revendications 1 à 13.

15. Sac constitué totalement ou en partie du film selon la revendication 14.

## Patentansprüche

1. Polymermaterial, zumindest teilweise biologisch abbaubares und zumindest teilweise biobasiert, **dadurch gekennzeichnet, dass** es, in Massenprozent ausgedrückt, bezogen auf die Gesamtmasse des Materials, zumindest umfasst:
a) zwischen 10 % und 80 % einer Matrix, umfassend mindestens einen Polyester, ausgewählt aus der Gruppe, bestehend aus Polybutylensuccinat (abgekürzt PBS), Polybutylenterephthalat (abgekürzt PBT), Polybutylensuccinat-Coadipat (abgekürzt PBSA), Polymethylenadipat/terephthalat (abgekürzt PTMAT), Polyethylenisosorbidterephthalat (abgekürzt PEIT) und Polybutylensuccinat-coterephthalat (abgekürzt PBST);
b) zwischen 10 % und 80 % mindestens eines biologisch abbaubaren und biobasierten Verstärkungsmittels;
c) zwischen 0,5 % und 5 % mindestens einer ionischen Flüssigkeit, **dadurch gekennzeichnet, dass** die ionische Flüssigkeit eine eutektische DES-(Deep Eutectic Solvents)-Mischung ist, die mindestens ein Salz organischer Kationen und mindestens eine andere Verbindung in Anteilen umfasst, so dass sich eine eutektische Mischung bildet.

2. Polymermaterial nach Anspruch 1, **dadurch gekennzeichnet, dass** der Polyester ausgewählt ist aus PBS, PBT und PEIT.

3. Polymermaterial nach Anspruch 1 oder 2, **dadurch gekennzeichnet, dass** das Verstärkungsmittel ausgewählt ist aus der Gruppe bestehend aus Polymilchsäure (abgekürzt PLA), Polyhydroxyalkanoat (abgekürzt PHA), Polyhydroxybutyrat (abgekürzt PHB), Polyhydroxyvalerat (abgekürzt PHV), Lignin , Cellulose und Celluloseether.

4. Polymermaterial nach Anspruch 3, **dadurch gekennzeichnet, dass** das Verstärkungsmittel ausgewählt ist aus PLA, Lignin, Cellulose und Celluloseethern.

5. Polymermaterial nach einem der Ansprüche 1 bis 4, **dadurch gekennzeichnet, dass** das mindestens eine Salz organischer Kationen organische Kationen umfasst, die mit anorganischen oder organischen Anionen komplexiert sind.

6. Polymermaterial nach einem der Ansprüche 1 bis 5, **dadurch gekennzeichnet, dass** das organische Kation ausgewählt ist aus der Gruppe bestehend aus Tetraalkylphosphonium-, N,N-Dialkylimidazolium-, N-Alkylpyridinium-, N-Dialkylpiperidinium-, N-Dialkylpyrrolidinium-, Tetraalkylammonium-, Pyrazolium-, N-Alkylthiazolium-, Trialkylsulfonium-, Trialkyltriazolium-, Choliniumkationen und deren Mischungen.

7. Polymermaterial nach einem der Ansprüche 1 bis 6, **dadurch gekennzeichnet, dass** das Anion des Salzes der organischen Kations ausgewählt ist aus der Gruppe bestehend aus dem Anion von Dialkylphosphat, Dialkylphosphinat, Dicyanamid, Bis(trifluormethylsulfonyl)imid, Bis(trifluormetha)sulfonimid, Alkylcarboxylat, Hexafluorophosphat, Sulfonat, Alkylsulfat, Tetrafluoroborat, Trifluoromethansulfonat, [C₄F₉SO₃]⁻, [CF₃CO₂]⁻, [(CF₃SO₂)₃C]⁻, [(CF₃SO₂)₂N]⁻, Nitrat, [ClO₄]⁻, F⁻, Br-, Cl⁻, I⁻, [Al₂Cl₇]⁻, Chloraluminat, [CuCl₂], [AuCl₄]⁻, [ZnCl₃]⁻, [SnCl₃]⁻ und Mischungen davon.

8. Polymermaterial nach einem der Ansprüche 1 bis 7, **dadurch gekennzeichnet, dass** das Salz des organischen Kations ausgewählt ist aus der Gruppe bestehend aus Trihexyl(tetradecyl)phosphoniumbistriflimid (abgekürzt LI-TFSI), Trihexyl(tetradecyl)phosphoniumchlorid (abgekürzt LI-CI), Trihexyl(tetradecyl)phosphoniumbromid (abgekürzt LI-Br), Trihexyl(tetradecyl)phosphoniumbis-2,4,4,4(trimethylpentyl)phosphinat (abgekürzt LI-TMP), Trihexyl(tetradecyl)phosphoniumbis-2 -(Ethylhexyl)phosphat (abgekürzt LI-EHP), Trihexyl(tetradecyl)phosphonium-2-ethylhexanoat (abgekürzt LI-EHT) und Tributylethylphosphoniumdiethylphosphat (abgekürzt LI-Ph).

9. Polymermaterial nach Anspruch 8, **dadurch gekennzeichnet, dass** das Salz des organischen Kations ausgewählt ist aus der Gruppe bestehend aus Trihexyl(tetradecyl)phosphoniumchlorid (abgekürzt LI-CI), Trihexyl(tetradecyl)phosphoniumbis-2,4,4,4 (Trimethylpentyl)phosphinat (abgekürzt LI-TMP) und Tributylethylphosphoniumdiethylphosphat (abgekürzt LI-Ph) und Mischungen davon.

10. Polymermaterial nach einem der Ansprüche 1 bis 9, **dadurch gekennzeichnet, dass** die die mindestens eine andere Verbindung der DES der eutektischen Mischung ausgewählt ist aus Glycerin, Harnstoff und ihren Mischungen.

11. Polymermaterial nach einem der Ansprüche 1 bis 10, **dadurch gekennzeichnet, dass** es zwischen 50 % und 80 % der Matrix umfasst

12. Polymermaterial nach einem der Ansprüche 1 bis 11, **dadurch gekennzeichnet, dass** es zwischen 10 % und 50 % biologisch abbaubares und biologisch gewonnenes Verstärkungsmittel umfasst.

13. Polymermaterial nach einem der Ansprüche 1 bis 12, **dadurch gekennzeichnet, dass** es zwischen 0,5 % und 2 % ionische Flüssigkeit, vorzugsweise zwischen 0,5 % und 1 % ionische Flüssigkeit enthält.

14. Folie, vorzugsweise Stretchfolie, oder Geschirrartikel, bestehend ganz oder teilweise aus dem Polymermaterial nach einem der Ansprüche 1 bis 13.

15. Beutel, der ganz oder teilweise aus der Folie nach Anspruch 14 besteht.

## Claims

1. Polymeric material that is at least partially biodegradable and at least partially biosourced, **characterised in that** it comprises, in percentage by mass expressed relative to the total mass of said material, at least:
a) between 10% and 80% of a matrix comprising at least one polyester chosen from the group consisting of polybutylene succinate (abbreviated PBS), polybutylene terephthalate (abbreviated PBT), polybutylene succinate co-adipate (abbreviated PBSA), polymethylene adipate/terephthalate (abbreviated PTMAT), polyethylene isosorbide terephthalate (abbreviated PEIT) and polybutylene succinate-co-terephthalate (abbreviated PBST);
b) between 10% and 80% of at least one biodegradable and biosourced reinforcement agent;
c) between 0.5% and 5% of at least one ionic liquid, **characterised in that** the ionic liquid is a eutectic mixture DES (Deep Eutectic Solvents) comprising at least one organic cation salt and at least one other compound in proportions forming a eutectic mixture.

2. Polymeric material according to claim 1, **characterised in that** the polyester is chosen from PBS, PBT and PEIT.

3. Polymeric material according to claim 1 or 2, **characterised in that** the reinforcement agent is chosen from the group consisting of polylactic acid (abbreviated PLA), polyhydroxyalkanoate (abbreviated PHA), polyhydroxybutyrate (abbreviated PHB), polyhydroxyvalerate (abbreviated PHV), lignin, cellulose and cellulose ethers.

4. Polymeric material according to claim 3, **characterised in that** the reinforcement agent is chosen from PLA, lignin, cellulose and cellulose ethers.

5. Polymeric material according to any one of claims 1 to 4, **characterised in that** the at least one organic cation salt comprises organic cations complexed with inorganic or organic anions.

6. Polymeric material according to any one of claims 1 to 5, **characterised in that** the organic cation is chosen from the group consisting of the cations tetraalkylphosphonium, N,N-dialkylimidazolium, N-alkylpyridinium, N-dialkylpiperidinium, N-dialkylpyrrolidinium, tetraalkylammonium, pyrazolium, N-alkylthiazolium, trialkylsulfonium, trialkyltriazolium, cholinium and the mixtures thereof.

7. Polymeric material according to any one of claims 1 to 6, **characterised in that** the anion of the organic cation salt is chosen from the group consisting of the anions dialkylphosphate, dialkylphosphinate, dicyanamide, bis(trifluoromethylsulfonyl)imide, bis(trifluoromethane)sulfonimide, alkylcarboxylate, hexafluorophosphate, sulfonate, alkylsulfate, tetrafluoroborate, trifluoromethanesulfonate, [C₄F₉SO₃]⁻, [CF₃CO₂]⁻, [(CF₃SO₂)₃C]⁻, [(CF₃SO₂)₂N]⁻, nitrate, [ClO₄]⁻, F⁻, Br⁻, Cl⁻, I⁻, [Al₂Cl₇]⁻, chloroaluminate, [CuCl₂], [AuCl₄]⁻, [ZnCl₃]⁻, [SnCl₃]⁻ and the mixtures thereof.

8. Polymeric material according to any one of claims 1 to 7, **characterised in that** the organic cation salt is chosen from the group consisting of trihexyl(tetradecyl)phosphonium bistriflimide (abbreviated LI-TFSI), trihexyl(tetradecyl)phosphonium chloride (abbreviated LI-CI), trihexyl(tetradecyl)phosphonium bromide (abbreviated LI-Br), trihexyl(tetradecyl)phosphonium bis-2,4,4,4(trimethylpentyl)phosphinate (abbreviated LI-TMP), trihexyl(tetradecyl)phosphonium bis-2-(ethylhexyl)phosphate (abbreviated LI-EHP), trihexyl(tetradecyl)phosphonium 2-ethylhexanoate (abbreviated LI-EHT) and tributylethylphosphonium diethylphosphate (abbreviated LI-Ph).

9. Polymeric material according to claim 8, **characterised in that** the organic cation salt is chosen from the group consisting of trihexyl(tetradecyl)phosphonium chloride (abbreviated LI-CI), trihexyl(tetradecyl)phosphonium bis-2,4,4,4(trimethylpentyl)phosphinate (abbreviated LI-TMP) and tributylethylphosphonium diethylphosphate (abbreviated LI-Ph) and the mixtures thereof.

10. Polymeric material according to any one of claims 1 to 9, **characterised in that** the at least one other compound of the DES of the eutectic mixture is chosen from glycerol, urea and the mixtures thereof.

11. Polymeric material according to any one of claims 1 to 10, **characterised in that** it comprises between 50% and 80% matrix.

12. Polymeric material according to any one of claims 1 to 11, **characterised in that** it comprises between 10% and 50% biodegradable and biosourced reinforcement agent.

13. Polymeric material according to any one of claims 1 to 12, **characterised in that** it comprises between 0.5% and 2% ionic liquid, preferably between 0.5% and 1% ionic liquid.

14. Film, preferably stretch film, or tableware item made wholly or in part of the polymeric material according to any one of claims 1 to 13.

15. Bag made wholly or in part of the film according to claim 14.
